Europäisches Patentamt

European Patent Office

Office européen des brevets

(19)

(11) Veröffentlichungsnummer: **0 147 632**

**A1**

(12) # EUROPÄISCHE PATENTANMELDUNG

(21) Anmeldenummer: **84114192.2**

(22) Anmeldetag: **23.11.84**

(51) Int. Cl.⁴: **F 23 N 1/02**

(30) Priorität: **24.12.83 DE 3347041**

(43) Veröffentlichungstag der Anmeldung:
**10.07.85 Patentblatt 85/28**

(84) Benannte Vertragsstaaten:
**AT BE CH FR LI NL**

(71) Anmelder: **M.A.N. MASCHINENFABRIK
AUGSBURG-NÜRNBERG Aktiengesellschaft
Dachauer Strasse 667 Postfach 50 06 20
D-8000 München 50(DE)**

(72) Erfinder: **Schurrer, Josef, Ing. grad.
Josefstrasse 2A
D-8024 Deisenhofen(DE)**

(54) **Verfahren zum Betreiben eines Brenners.**

(57) Verfahren zum Betreiben eines Brenners (10') mit Brennstoff-Luft-Gemisch, wobei die Verbrennungsluft (21) vorgewärmt wird. Durch Änderung der Temperatur der Verbrennungsluft (21) wird bei gleichem Luftdurchsatz das Luftgewicht sich ändern, so daß das Gemisch-Gewichtsverhältnis sich ebenfalls verändert. Es wird vorgeschlagen, die Verbrennungsluft-Zufuhr (23) und/oder die Brennstoffzufuhr (31) zum Brenner in Abhängigkeit der Verbrennungsluft-Temperatur zu regeln derart, daß ein optimales Gemisch-Gewichtsverhältnis in verschiedenen Betriebsstadien beibehalten wird. Auf diese Weise wird eine optimale Verbrennung erreicht und dabei die Rußbildung weitestgehend verhindert.

Fig. 1

EP 0 147 632 A1

M.A.N. MASCHINENFABRIK AUGSBURG-NÜRNBERG
Aktiengesellschaft
gü/sd


München, 19. Dezember 1983


Verfahren zum Betreiben eines Brenners


Die Erfindung bezieht sich auf ein Verfahren zum Betreiben eines Brenners mit Brennstoff-Luft-Gemisch, wobei die Verbrennungsluft vorgewärmt wird.

Bei Brennern dieser Art kann die Verbrennungsluft auf unterschiedliche Weise vorgewärmt werden, wie z.B. mittels Abwärme der Rauchgase desselben Brenners oder Fremdwärme.

Es hat sich jedoch bei mit vorgewärmter Verbrennungsluft betriebenen Brennern gezeigt, daß eine deutliche Verringerung der Verbrennungsqualität einsetzt, sofern das Kraftstoff-Luftverhältnis nicht korrigiert, d.h. konstant gehalten wird.

Der Erfindung liegt die Aufgabe zugrunde, ein Verfahren der eingangs genannten Art zu schaffen, mit dem der Verbrennungswirkungsgrad des Brenners auf dem günstigsten Niveau gehalten wird, wodurch gleichzeitig die Schadstoffemission - insbesondere Ruß - minimal bleibt.

Die Aufgabe ist erfindungsgemäß mit den im Anspruch 1 gekennzeichneten Verfahren gelöst.

7.2226

Der Erfindung liegt die Erkenntnis zugrunde, daß im Laufe des Betriebes eines Brenners mit konstantem Brennstoff- und Verbrennungsluft-Durchsatz das Gewichtsverhältnis des Gemisches sich verändert. Dieses ist auf die mit der Temperatur sich gewichtsmäßig verändernde Luftmenge zurückzuführen. Bei Betrieb mit variierender Verbrennungslufttemperatur sind somit Betriebsperioden mit schlechter Verbrennung unvermeidlich. Durch die schlechte Verbrennung wird z.B. die Rußbildung im Brenner verstärkt und damit sowohl der Verbrennungswirkungsgrad als auch der Kesselwirkungsgrad herabgesetzt.

Mit dem erfindungsgemäßen Verfahren wird durch Anpassung des Durchsatzverhältnisses in Abhängigkeit der Temperatur der Verbrennungsluft die der Luftgewichtsänderung berücksichtigt, so daß in allen Betriebsperioden eine optimale Verbrennung möglich ist.

Die Regelung erfolgt vorzugsweise derart, daß das Gewichtsverhältnis des Brennstoff-Luft-Gemisches konstantgehalten wird. Dieses Verhältnis wird für den jeweiligen Brenner so gewählt, daß eine optimale Verbrennung erfolgt. Die Regelung kann entweder durch Beeinflussung der Brennstoffzufuhr oder der Luftzufuhr oder beider Komponenten in Abhängigkeit der Verbrennungslufttemperatur erfolgen.

Das Brennstoff-Luft-Gewichtsverhältnis wird gemäß einer weiteren Ausführung der Erfindung so gewählt, daß die Austrittstemperatur der Abgase aus dem Kessel um 150°C liegt. Hierdurch werden zu geringe Temperaturen innerhalb des Kessels, die zu Kondensationen führen können, vermieden.

7.2226

Das erfindungsgemäße Verfahren wird anhand eines in der Zeichnung schematisch dargestellten Ausführungsbeispieles näher erläutert.

Das Ausführungsbeispiel zeigt einen Heizkessel 10 mit einem Brenner 10'. Das im Brenner 10' entstehende Rauchgas 13 wird durch den Kessel 10 und über ein Rauchrohr 11 in einen Wärmetauscher 12 geleitet, in dem das Rauchgas 13 bis zur Kondensation abgekühlt wird. Das Kondensat 14 wird in einem Sammelbehälter 15 aufgefangen, während das auf diese Weise gereinigte und stark abgekühlte Abgas durch ein senkrecht stehendes Rohr 16 abgeführt wird, das beispielsweise aus einem Kunststoff besteht.

Zur Abkühlung des Rauchgases 13 wird Kühlluft 21 durch den Wärmetauscher 12 geleitet, das über ein Regelventil 22 zum Teil für Wohnheizzwecke abgeleitet und zum anderen Teil über eine Leitung 23 als Verbrennungsluft dem Brenner 10' zugeführt wird. Die Brennstoffzufuhr erfolgt über ein Regelventil 31.

Um den Verbrennungswirkungsgrad maximal zu halten und damit auch einer Rußbildung im Kessel 10 entgegenzuwirken, wird das Brennstoff-Luft-Gemisch in allen Betriebsstadien auf einem bestimmten Gewichtsverhältnis gehalten.

In verschiedenen Betriebsstadien des Kessels hat die mit dem Rauchgas 13 erwärmte Luft 21 unterschiedliche Temperaturen. Sie wird beim Start des Kessels 10 eine wesentlich niedrigere Temperatur als während des Hochbetriebes haben. Das bedeutet, daß bei einem etwa gleichbleibenden Volumendurchsatz durch die Leitung 23 sich das Gewicht der durchfließenden Verbrennungsluft im Laufe des Betriebes verringern wird.

7.2226
19.12.1983

0147632

Um dieser Änderung bei der Brennstoff-Luft-Gemisch-Zumessung Rechnung zu tragen, ist ein Thermostat 25 vorgesehen, das in Abhängigkeit der von einem Sensor 24 gemessenen Verbrennungsluft-Temperatur über eine Leitung 30 das Brennstoffventil 31 oder über eine Leitung 34 das Luftventil 22 oder beide gleichzeitig regelt derart, daß das Brennstoff-Luft-Gewichtsverhältnis auf dem optimalen Wert konstant gehalten wird. Das Gewichtsverhältnis wird so gewählt, daß am Ausgang 26 des Kessels 10 eine Temperatur von etwa 150°C herrscht. Mit einer derartigen Einstellung kann eine Kondensation innerhalb des Kessels 10 verhindert werden.

Die Verbrennungsluftzufuhr- bzw. Brennstoffzufuhr-Regelung ist auch in ähnlicher Weise anzuwenden, wenn die Verbrennungsluft 21 auf eine andere Weise als mit den Abgasen 13 aufgeheizt wird.

Das Verfahren eignet sich auch zur Anwendung von üblichen im Keller aufgestellten Heizkesseln, bei denen die aus dem Kellerraum entnommene Verbrennungsluft beispielsweise aufgrund von schwankenden Außentemperaturen sich verändert. Im Ausführungsbeispiel gemäß der Zeichnung kann das Regelventil 22 für die Luft 21 selbstverständlich auch in der Verbrennungsluft-Zufuhrleitung 23 angeordnet sein.

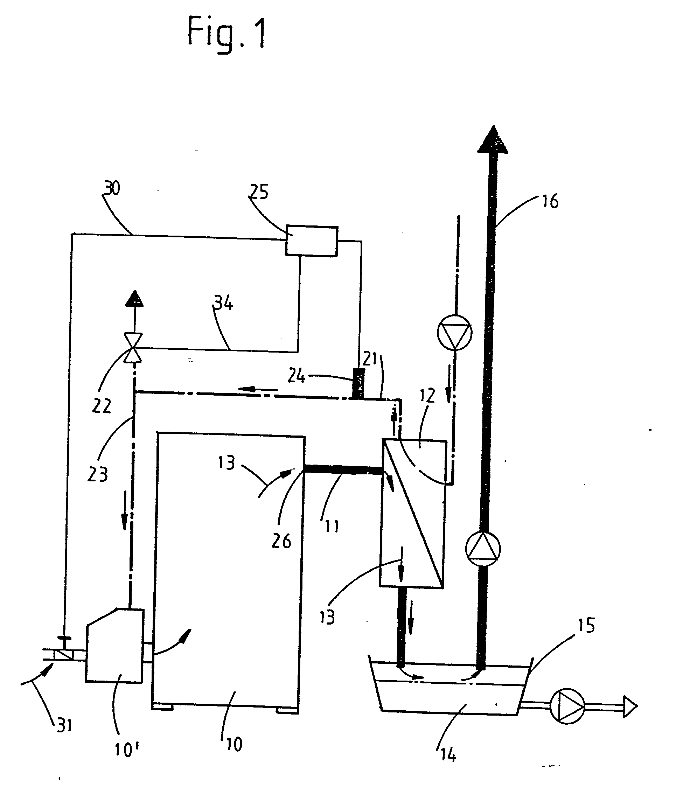

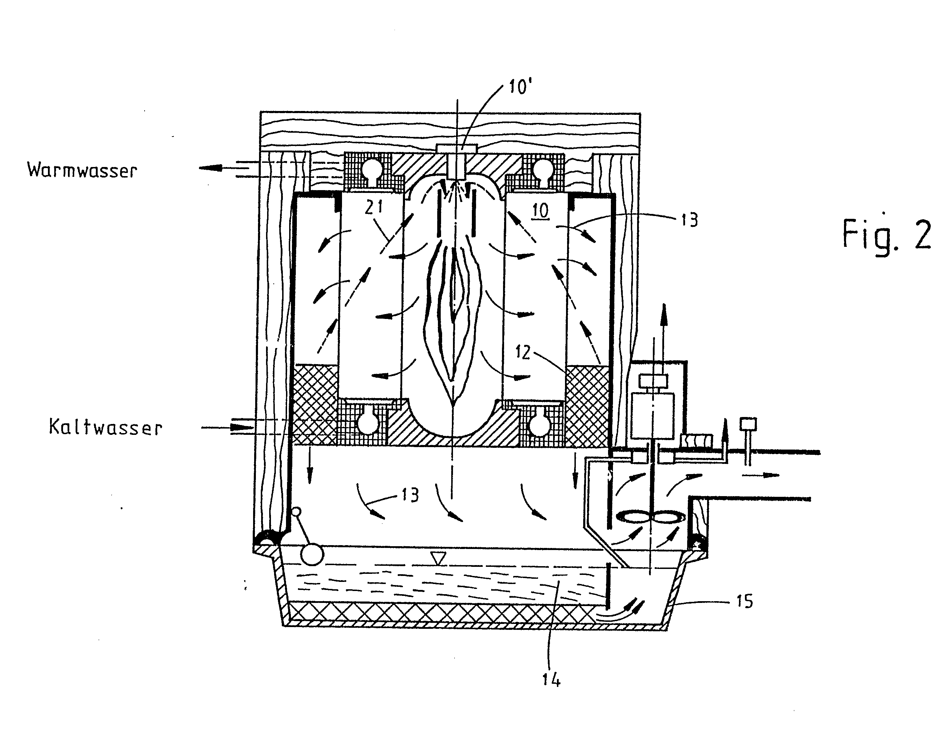

Die rußarme Verbrennung erlaubt ferner kompakte Bauweisen von Heizkesseln und dergleichen, bei denen alle Bauteile, wie in Fig. 2 gezeigt ist, raumsparend ineinander geschachtet und in einem Gehäuse angeordnet werden können, zumal Wartungen des Kessels 10 nur in sehr großen Abständen, wenn überhaupt, erforderlich werden.

7.2226
19.12.1983

M.A.N. MASCHINENFABRIK AUGSBURG-NÜRNBERG
Aktiengesellschaft
gü/sd

München, 19. Dezember 1983

---

P a t e n t a n s p r ü c h e

1. Verfahren zum Betreiben eines Brenners (10')
   mit Brennstoff-Luft-Gemisch, wobei die Verbrennungsluft (21) vorgewärmt wird, dadurch
   gekennzeichnet, daß die Brennstoff- und/oder
   die Verbrennungsluft-Zufuhr in Abhängigkeit der
   Verbrennungsluft-Temperatur geregelt wird.

2. Verfahren nach Anspruch 1, dadurch gekennzeichnet,
   daß die Brennstoff- und/oder Verbrennungsluft-
   Zufuhr so geregelt wird, daß das Gewichtsverhältnis des Brennstoff-Luft-Gemisches konstant
   gehalten wird.

7.2226

# Fig.1

Warmwasser

Kaltwasser

10'

21

10

13

12

13

14

15

Fig. 2

0147632

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 7, Nr. 20 (M-188)[1165], 26. Januar 1983; & JP - A - 57 175 813 (OSAKA GAS K.K.) 28.10.1982 * Insgesamt * | 1 | F 23 N 1/02 |
| | --- | | |
| X | DE-A-3 132 867 (H.B. RICKE) * Zusammenfassung; Ansprüche 4-8; Seite 13, letzter Abscnhnitt * | 1,2 | |
| | --- | | |
| Y | AT-B- 365 334 (SOUTHWIRE CO.) * Figuren; Anspruch 1 * | 1,2 | |
| | --- | | |
| A | GB-A-2 077 903 (OTTO JUNKER GmbH) | | |
| | ----- | | |

RECHERCHIERTE SACHGEBIETE (Int. Cl.4)

F 23 N

Der vorliegende Recherchenbericht wurde für alle Patentansprüche erstellt.

| Recherchenort DEN HAAG | Abschlußdatum der Recherche 20-03-1985 | Prüfer THIBO F. |
|---|---|---|